# EUROPEAN PATENT APPLICATION

(11) **EP 0 541 345 A1**
(43) Date of publication of application: **12.05.1993**
(21) Application number: 92310088.7
(22) Date of filing: 04.11.1992
(51) Int. Cl.: G06F 15/40

(54) **Displaying dynamic control blocks**

(30) Priority: 04.11.1991 US 788623
(71) Applicant: International Business Machines Corporation, Armonk, N.Y. 10504 (US)
(72) Inventor: Dewitt, Jimmie Earl, Georgetown, TX 78626 (US); Summers, James Hoyet, Round Rock, TX 78681 (US)
(74) Representative: Moss, Robert Douglas

(57) **Abstract**

There is provided for use in an interactive data processing system a user friendly software method for accessing and displaying information from related, linked system and application control blocks by predefining selectable fields in each control block type, providing format instructions for each control block type and including a two part link definition including both a pointer to and the type of the related control block. Upon user selection of a selectable field the software utilizes its associated link definition information to access the chosen data for display in accord with the appropriate format instructions.

## Description

The present invention relates to interactive data processing systems and more particularly to a system for enabling users to select and display process and operating system control blocks.

### Background Art

In the search to make program development faster and more efficient, various types of system and program debuggers have been developed. When performing debug and/or analysis operations developers and users of programs and operating systems need to know various kinds of information about the system with which they are working, especially control information stored by computer programs and operating systems in a variety of control blocks.

Interactive debugging techniques are known in the prior art, which techniques allow a user thereof to have information of interest displayed on the screen of a terminal device. One technique is described in IBM Technical Disclosure Bulletin, Vol. 32, No. 5A, October 1989, "Managing Full-Screen Display of an Interactive Debug Facility Using Asynchronous Resource Managers".

When a user of conventional prior art systems viewing a given control block needed data from a different, related control block pointed to by the first control block, it was necessary to request a `display block' function and then supply the address, using the information that was previously displayed.
This technique is time consuming and has potential for error due to, inter alia, improperly keying the address of the new control block.

There is a method for linking information together in interactive data processing systems known as hyperlinks. A typical way in which hyperlinks have been implemented involves predefining links between related pieces of information by the developer. Links are usually a single item of information such as an address pointer or file name. In this manner a plurality linked display panels or windows containing text (hypertext), graphics (hypergraphics), and multimedia data objects such as sound (hypermedia) are made available in a user friendly way. IBM Technical Disclosure Bulletin, Vol. 33, No. 11, April 1991, Implementing Memory Efficient Hypertext in Online Manual Tool', describes an interactive system with hypertext linked display.

### Summary of the Invention

The present invention provides in a first aspect a method for interactively displaying data from dynamic data structures, for use in an interactive data processing system including a processor device, a memory, a user input device and a display, comprising: providing a type-unique format routine for each unique type of dynamic data structure in the system; in response to user selection of a link including a pointer to a dynamic data structure and an indicator of the dynamic data structures type, accessing said dynamic data structure; formatting dynamic data structure data in accordance with the type-unique format routine for said dynamic data structure; and displaying formatted data to the user.

It is a second aspect of the invention to provide a system for interactive display of information from dynamic data structures comprising; means for providing links between dynamic data structures of plural types, each of said links having a location pointer and an indicator of dynamic data structure type; means for formatting information for display according to a unique format routine for each dynamic data structure type; means for accessing a dynamic data structure in response to user selection of a dynamic data structure link; and means for displaying formatted data.

Preferrably, for each display line formatted, there is means for correcting dynamic data structure data from binary stored form to a displayable form, means for storing the converted data, and means for correlating with the stored data a dynamic data structure type mask.

The present invention has applicability in the field of debugging programs, providing links (termed HYPERBLOCK links) between related control blocks, so that users of a system including the invention may proceed directly from one, windowed display of data from a control block to another windowed display of data from a related control block without a required return to an index.

The formatting information which is provided in association with each link enables the linked-to control block data to be displayed in a generally similar and meaningful way.

Each type format routine may be designed to output two tables for subsequent use in processing user interaction as well as for creating commands for input to a display device. One such table, termed the line table, contains line by line descriptions of actual information to appear on the display screen. The other table, the mask table, details which field(s) by line are selectable and which format routine to call, that is those fields for which the two part HYPERBLOCK links have been defined.

### Brief Description of the Drawing

An embodiment of the present invention will now be described in more detail with reference to the accompanying drawings in which:
Fig. 1 is a schematic diagram of a system in which our invention may be utilized;
Fig. 2 shows a display window containing sample data from a control block;
Fig. 3 shows a display window containing sample data from a control block related to that of Fig. 1;
Fig. 4 shows a two table HYPERBLOCK data index structure in accordance with our invention;
Fig. 5 shows a HYPERBLOCK data structure; and
Fig. 6 is a logic flow chart illustrating HYPERBLOCK linking in response to a user selection.

### Description of a Preferred Embodiment

According to an embodiment of the present invention a method and system for facilitating interactive system debug or analysis through display of HYPERBLOCK linked control blocks executes as an IBM Presentation Manager application on an IBM Personal System/2 furnished with the IBM OS/2 2.0 operating system (IBM Presentation Manager, Personal System/2 and OS/2 are registered trademarks of IBM Corporation).

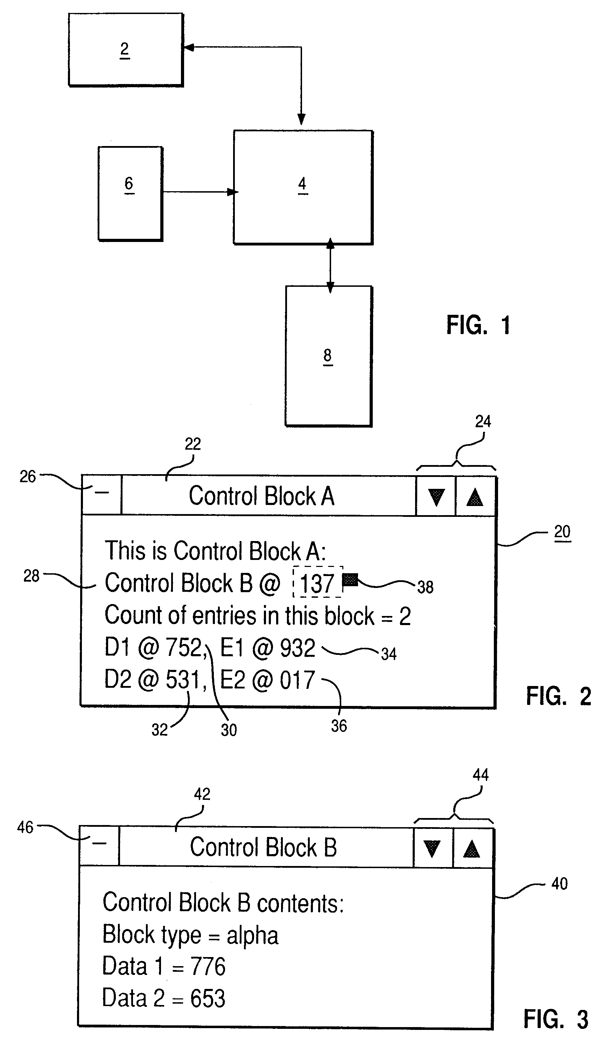

Such a system is shown schematically in Fig. 1. The system includes a keyboard display terminal 2 interconnected to processor 4 which is operatively coupled to user input device 6 and to memory 8. User input device 6 is preferably a mouse, terminal 2 preferably includes a colour monitor, and memory 8 may be implemented as a combination of RAM and DASD storage.

Information displayed interactively on the screen of display terminal 2 is categorized as either static data such as column headings or field names or as dynamic data. Dynamic data includes control block information of substantive interest while performing system debug or analysis. Dynamic data comprises actual. control block fields, particularly those containing references to related control blocks. It should be noted that control block information is also dynamic in that field contents are often time variant.

Figure 2 shows a window 20 containing sample data from a control block A, as displayed on the screen of display terminal 2 of Fig. 1. Those having skill in the art will appreciate that window 20 comprehends conventional functions and features such as title bar 22, scroll indicators 24 and system icon 26 the operation of which are well understood and form no part of the present invention.

For the sake of simplicity in this description A, B, D and E are used to represent different control block types, each type being associated with a predefined format routine.

Part of field 28 is enclosed in dotted lines to represent its being displayed with characteristics which visually distinguish it from other fields in window 20 and thereby inform the user that it is selectable. Such visual distinction may proceed from the use of a different colour, reverse display or the like. Field 28 contains a reference to another control block of a different type, Control Block B.

Fields 30, 32 in window 20 refer to two instances of a third control block type, D. Fields 34, 36 are instances of a fourth control block type, E.

Fig. 3 shows a window 40 displayed on the screen of terminal 2 as a result of user selection of field 28. User selection is preferably indicated in the conventional manner of manipulating mouse 6 to position pointer character 38 on the field prior to clicking. The data content format differences between windows 20 and 40 are due to their containing data from two different control block types. While we have shown no references to related control blocks in window 40, it will be understood that we have done so only to maintain the simplicity of this description. Obviously, window 40 could contain references to many other control blocks of many still different types.

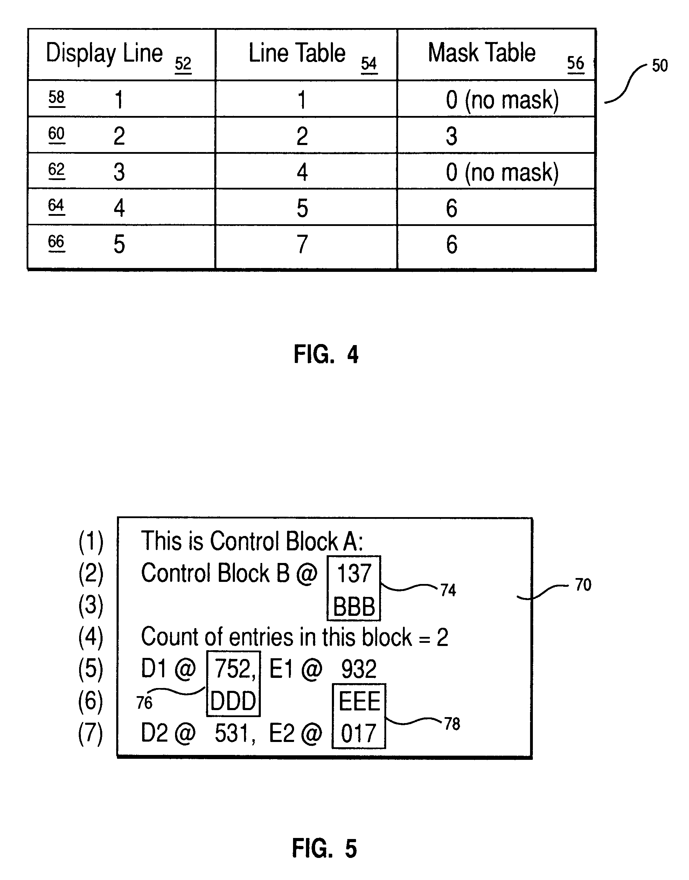

Referring now to Figs. 4 and 5, we will describe how window 20 of Fig. 2 comes to be displayed. The index information which is used to generate the display of control block A data is illustrated in Fig. 4. Fig. 4 represents the tables output by the A format routine in preparing the display of window 20 from control block A data in memory 8. The data array shown in Fig. 5 represents the control block information formatted in accordance with our invention comprising control block A.

The following pseudocode represents the logic followed in formatting window 20, Fig. 2, using the index and data structure of Figs. 4 and 5.

### Control Block A Formatter:

Get Control Block A.
Put_with_mask ('This is Control Block A:',0).
T=Format ('Control Block B @ %:', A.B).
Put_with_mask (T,′ BBB′).
T=Format (Count of entries in this block = %i′, A.count).
Put_with_mask (T,0).
T=format (′D1 @ %i, E1 @ %i′, A.D1, A.E1).
Put_with_mask (T, ′ DDD EEE′).
T=Format (′D2 @ %i, E2 @ %i; A.D2, A.E2).
Put_with_mask (T, ′ DDD EEE′).
Put_with_mask (data, mask)
Hyperblock_index_structure(current_line).Line_table = current position in Hyperblock_data_structure,
Move data into Hyperblock_data_structure (current_position).
Current_position = current_position + length of data.
If (mask = 0)
Hyperblock_index_structure(current_line).
mask_table = 0
Else
If (mask is already in the mask_table)
Copy value from existing mask_table entry to this mask_table entry.
Else
Hyperblock_index_structure(current_line). mask_table = current_position.
Move mask into Hyperblock.data_structure (current_position).
Current_position = current_position + length of mask.
Current_line = current_line + 1.

Thus, in Fig. 4, an array structure 50 is shown including column headings DISPLAY LINE #, LINE TABLE, and MASK TABLE, 52, 54 and 56, respectively. Rows 58, 60, 62, 64 and 66 contain data pertinent to five lines of substantive information shown in window 20. In column 52 each row is simply the line number of the final display, but in column 54 the row entries refer to row numbers (1) through (7) set out in Fig. 5 adjacent data block 70.

In Fig. 5, the link information for control block B is indicated generally at 74. A HYPERBLOCK link as above noted includes two parts, an address pointer and a type indicator. In this case, '137' is a sample address pointer; and BBB indicates that the B type format routine should be used to structure the information at the indicated location for display. Similarly, HYPERBLOCK links are specified also at 76 and 78. Link 76 is one of two for display line 5, and link 78 is the second of two for display line 5. which has two HYPERBLOCK links specified.

In Fig. 5, notice that rows (3) and (6) do not contain information visible in window 20, while the contents of the remaining rows appear in Fig. 2. Thus, it is that group of numbers, excluding (3) and (6), which are present in the row entries of column 54, the Line Table.

Referring now to column 56 in Fig. 4, the Mask Table, notice that the entries for rows 58 and 62 indicate a line of display information which has no HYPERBLOCK links. That is, the meaning of 0 is that no field in that line is selectable as a pointer to a related control block. The entry for row 60, however, is 3, meaning that the mask for the selectable field in that line (of the window 20 display) is found in row (3) of data block 70. Rows 64 and 66 of Fig. 4 each contain a non zero value, 6 in column 56, indicating that display lines 4 and 5 each have a HYPERBLOCK link. Since the mask value is the same, 6, row (6) in Fig. 5 contains the mask information to be used in each case.

There follows pseudocode of the logic followed in outputting window 20 of Fig. 2 using the data of Figs. 4 and 5.
For i = first_line_of_displayed_area to
last_line_of_displayed_area
Do
Position cursor at the start of the line.
If (mask_pointer = 0)
Output the line of data as 'static' data.
Else
Do
While (there is 'mask' data to process)
Do
Scan into the 'mask' for the next field start.
Output the data before the field start as 'static' data.
Scan the 'mask' to locate the end of this field.
Output the data in the field as 'link' data.
Step past the end of the field.
End
If (there is still 'data' not output)
Output the remainder of the data as 'static' data.
End
End

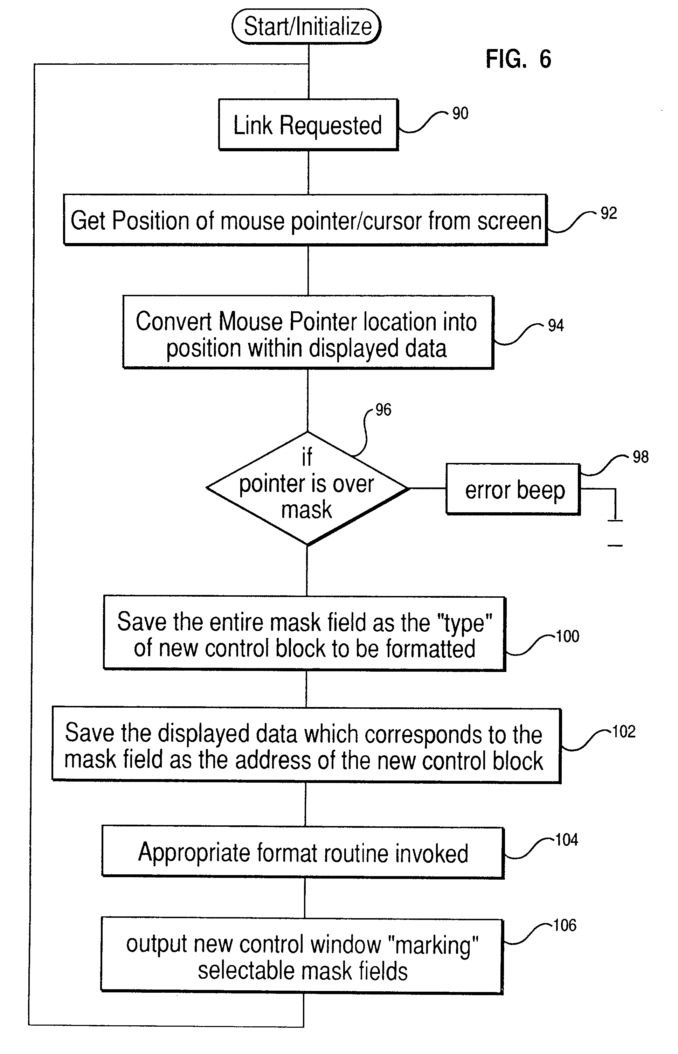

Refer now to Fig. 6, which is a flow chart useful in understanding the operation of our invention. The process flow is described after a point in time when at least a first window containing data from a control block with at least a selectable field has been displayed to a user, e.g., after a window such as window 20 of Fig. 2 is displayed on the screen of display terminal 2. The HYPERBLOCK fields are displayed in a different colour.

At block 90, the user can then select to view the next control block information, by clicking in our example on field 28. At block 92, the mouse pointer (38, Fig. 2) position is obtained from the system via messages. This position is reported in the form of x,y coordinates and are then converted into a row, column location which maps directly into the displayed data (Fig. 5). Those having skill in the art will appreciate that attaining the location of the mouse pointer represents conventional function, and forms no part of the present invention. If the position of the pointer is found at decision block 96 to not be located at a selectable field, an audible warning beep, or some other warning/error message to the user is issued at step 98.

Otherwise, the HYPERBLOCK process continues to step 100 where the type, (mask value) of the linked-to control block, BBB in our example, is obtained using the mask table information to access the control block at the appropriate entry point.

The address, @ 137 in our example., of the linked-to control block is retrieved from the to be displayed data in the control block at step 102. The corresponding format routine is then invoked at step 104 for formatting the window (window 40, Fig. 3 in our example) containing data from the linked-to control block. The new window is then output at step 106.

As the output is generated, the new control block information is stored into tables as above described in connection with Figs. 4 and 5. The process has now completed one iteration and is ready for the user to select another HYPERBLOCK link for display.

## Claims

1. A method for interactively displaying data from dynamic data structures, for use in an interactive data processing system including a processor device, a memory, a user input device and a display, comprising;
providing a type-unique format routine for each unique type of dynamic data structure in the system;
in response to user selection of a link including a pointer to a dynamic data structure and an indicator of the dynamic data structure's type, accessing said dynamic data structure;
formatting dynamic data structure data in accordance with the type-unique format routine for said dynamic data structure; and
displaying formatted data to the user.

2. The method of Claim 1 wherein the formatting step includes, for each display line formatted;
converting dynamic data structure data from binary to character format;
storing converted data; and
associating a type mask with stored converted data.

3. A system for interactive display of information from dynamic data structures comprising; means for providing links between dynamic data structures of plural types, each of said links having a location pointer and an indicator of dynamic data structure type;
means for formatting information for display according to a unique format routine for each dynamic data structure type;
means for accessing a dynamic data structure in response to user selection of a dynamic data structure link;
and means for displaying formatted data.

4. The system of Claim 3 wherein said means for formatting comprises, for each display line formatted:
means for converting dynamic data structure data from binary stored form to a displayable form;
means for storing converted data; and
means for correlating with the stored data a dynamic data structure type mask.

5. A system according to Claim 3 or Claim 4 wherein said means for formatting includes:
table means for relating stored information by line to be displayed with locations within each line of link means to other dynamic data structures.

6. An interactive data processing system having a processor, a memory, a user input device and a display, including an improved system for displaying information from dynamic data structures comprising:
means for providing links for interrelating dynamic data structures of plural types, said links having a location pointer and an indicator of dynamic data structure type;
means for formatting information for display according to a type-unique format routine for each type of dynamic data structure in the system;
means for accessing a dynamic data structure in response to user selection of a dynamic data structure link using said user input device;
means for displaying formatted data.
